# EUROPÄISCHE PATENTSCHRIFT

(11) **EP 0 924 157 B1**
(45) Veröffentlichungstag und Bekanntmachung des Hinweises auf die Patenterteilung: **02.07.2003**
(21) Anmeldenummer: 98123217.6
(22) Anmeldetag: 05.12.1998
(51) Int. Cl.: B66B 23/14, B65G 39/20

(54) **Verbindungseinrichtung zwischen Tragrollenachsen und Ketten-Verbindungsrohren**
Assembly device between axles of supporting rollers and chains connecting tubes
Dispositif d'assemblage entre axes des galets porteurs et tubes de liaison des chaines

(30) Priorität: 17.12.1997 EP 97810991
(43) Veröffentlichungstag der Anmeldung: 23.06.1999
(73) Patentinhaber: INVENTIO AG, CH-6052 Hergiswil NW (CH)
(72) Erfinder: Pallinger, Reinhard Ing., 1210 Wien (AT)

(56) Entgegenhaltungen:
- EP-A- 0 606 990
- GB-A- 2 057 093

## Beschreibung

Die vorliegende Erfindung betrifft einen Fahrsteig oder eine Fahrtreppe mit einer Verbindungseinrichtung an Transportketten für die Lagerung und Mitnahme von Paletten oder von Stufen , wobei die Transportketten aus zwei parallel angeordneten und mit Verbindungsrohren quer distanziert zusammengefügten Kettensträngen mit Kettengliedern, Tragrollen und als Tragrollenachsen ausgebildete Kettenbolzen mit Achsstummeln bestehen und wobei die Verbindungseinrichtung die beidseitig in die Verbindungsrohre eingeschobenen Achsstummel der Tragrollenachsen in der eingeschobenen Lage festhält.

Eine Verbindungseinrichtung für den vorgenannten Zweck kann auf verschiedene Arten hergestellt werden. Eine übliche Praxis besteht darin, dass bei eingeschobenem Achsstummel durch das Verbindungsrohr und den Achsstummel ein Loch gebohrt wird, durch welches dann beispielsweise ein Spannstift getrieben wird. Dieses Verbohren und Verstiften erfordert relativ viel teure Handarbeit, ebenso für die Demontage bei allfälligen Reparaturen.

Die EP 0 606 990 beschreibt und zeigt zwei Varianten einer neuen Verbindungseinrichtung, bei welcher in der ersten Variante das Verbindungsrohr eine innere Ringnut sowie eine angesenkte Mündung und der eingeschobene Achsstummel eine in diese Ringnut einklinkende Federkugel aufweist. Bei der zweiten Variante weist der Achsstummel einen Federring in einer eingestochenen Nut auf, welcher beim Einschieben des Achsstummels in das Verbindungsrohr bei ihrer Endposition in die Ringnut des Verbindungsrohr springt und den Achsstummel festhält.

Diese Einrichtung kann den Nachteil aufweisen, dass die Tragrollenachse mit dem Achsstummel nicht mehr demontiert werden kann wenn die Eindringtiefe der Federkugel oder des Federringes grösser als deren Halbmesser beträgt. Ist die Eindringtiefe der Federkugel oder des Federringes kleiner als deren Halbmesser, dann kann die dadurch reduziert Haltekraft bei Vibrationseinwirkung ein seitliches Verschieben des Achsstummels im Verbindungsrohr ermöglichen.

Die Aufgabe der vorliegenden Erfindung liegt nun darin, eine Verbindungseinrichtung am Achsstummel der Tragrollenachse und dem Verbindungsrohr zu schaffen, die eine sichere Haltekraft der Tragrollenachse, bzw. des Achsstummels im Verbindungsrohr gewährleistet und die ein leichtes und problemloses Montieren und Demontieren der hiermit verbundenen Teile ermöglicht.

Die erfindungsgemässe Verbindungseinrichtung zeichnet sich dadurch aus, dass mittels einem radialen Einstich im Achsstummel der Tragrollenachse, mittels einem oder zwei eingefrästen Schlitzen im Verbindungsrohr und einem in den, bzw. in die eingefrästen Schlitze eingesetzten Federbügel eine unverrückbare Verbindung des Achsstummels der Tragrollenachse mit dem Verbindungsrohr gebildet wird und dass die Verbindung durch Entfernen des Federbügels ohne Kraftaufwand jederzeit leicht wieder gelöst werden kann.

Vorteilhafte Weiterbildungen und Verbesserungen sind in den Unteransprüchen aufgeführt.

Die konische Andrehung am einzuschiebenden Ende des Achsstummels der Tragrollenachse ist als Montagekonus ausgebildet und ermöglicht das Einschieben des Achsstummels bei eingesetztem Federbügel beim Verbindungsrohr mit selbsttätigem Einrasten des Federbügels in den Radialeinstich in der endgültigen Lage des Achsstummels im Verbindungsrohr.

Durch die radial Form, Tiefe und Anordnung des Einstichs, der Breite der Schlitze und der Form des Federbügels wird nach dem Einrasten des Federbügels durch den Schlitz in den Radialeinstich des Achsstummels eine Formschlussverbindung zwischen Achsstummel und Verbindungsrohr gebildet und so der Achsstummel unverrückbar im Verbindungsrohr gehalten, wobei die Einschnapptiefe des Federbügels in den Radialeinstich grösser ist als der Halbmesser eines mit Runddraht gefertigten Federbügels.

Der Federbügel kann als einfaches und billiges Stanzteil, vorzugsweise aus Federstahlblech geeigneter Elastizität und Dicke, ohne zusätzliche Bearbeitung ausgeführt werden.

Der Federbügel kann als Variante auch aus Federstahl-Runddraht mit zweckmässigem Durchmesser und angepasster Elastizität bestehen. Auf einer Federdraht-Formmaschine lässt sich so ein Teil ohne Werkzeugkosten schnell und billig herstellen.

Die Führung des Federbügels im Verbindungsrohr ist als ein radial eingefräster Schlitz oder zwei gegenüberliegend radial eingefräste Schlitze ausgebildet.

Eine Verlängerung der Achsstummel unter die Stufen- und Palettenlager und über diese hinaus unterstützt die Biegefestigkeit der Verbindungsrohre.

Die Erfindung wird im folgenden anhand eines Ausführungsbeispiels näher erläutert und in den Zeichnungen dargestellt. Es zeigen:
Fig.1 Eine Transportkette mit Kettensträngen und Verbindungsrohren,
Fig.2a Die Verbindungseinrichtung mit gestanztem Federbügel im Längsschnitt,
Fig.2b Die Verbindungseinrichtung mit gestanztem Federbügel im radialen Querschnitt,
Fig.2c Der gestanzte Federbügel allein,
Fig. 3a Die Verbindungseinrichtung mit Runddraht-Federbügel im Längsschnitt,
Fig.3b Die Verbindungseinrichtung mit Runddraht-Federbügel im radialen Querschnitt,
Fig.3c Der Runddraht-Federbügel allein,
Fig.4a Die Verbindungseinrichtung mit einseitiger Einfräsung und unsymmetrischem Runddraht-Federbügel im Längsschnitt,
Fig.4b Die Verbindungseinrichtung mit einseitiger Einfräsung und unsymmetrischem Runddraht-Federbügel im radialen Querschnitt und
Fig.4c Der unsymmetrische Runddraht-Federbügel allein.

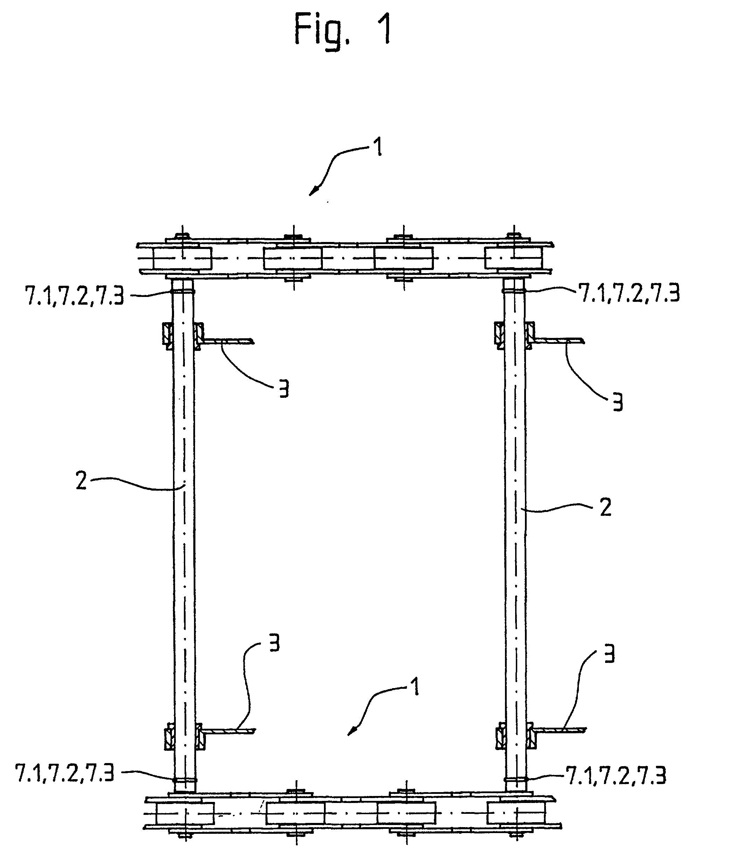

Die Fig.1 zeigt einen herausgeschnittenen Teil einer Transportkette, wie sie für Personenförderanlagen -Rollsteige und Fahrtreppen- allgemein verwendet wird. Diese besteht im wesentlichen aus zwei parallel angeordneten, seitlichen Kettensträngen 1, welche mittels Verbindungsrohren 2 quer distanziert zusammengefügt sind. Bei den Verbindungsrohren 2 ist mit 7.1/2/3 ein Teil der Verbindungseinrichtungen angedeutet, mittels welchen Teile der Kettenstränge 1 mit den Verbindungsrohren 2 zusammengefügt werden. Auf den Vebindungsrohren 2 sind ferner je zwei Stufen- oder Palettenlager 3 angeordnet, welche Bestandteil von nicht dargestellten Stufen oder Paletten sind.

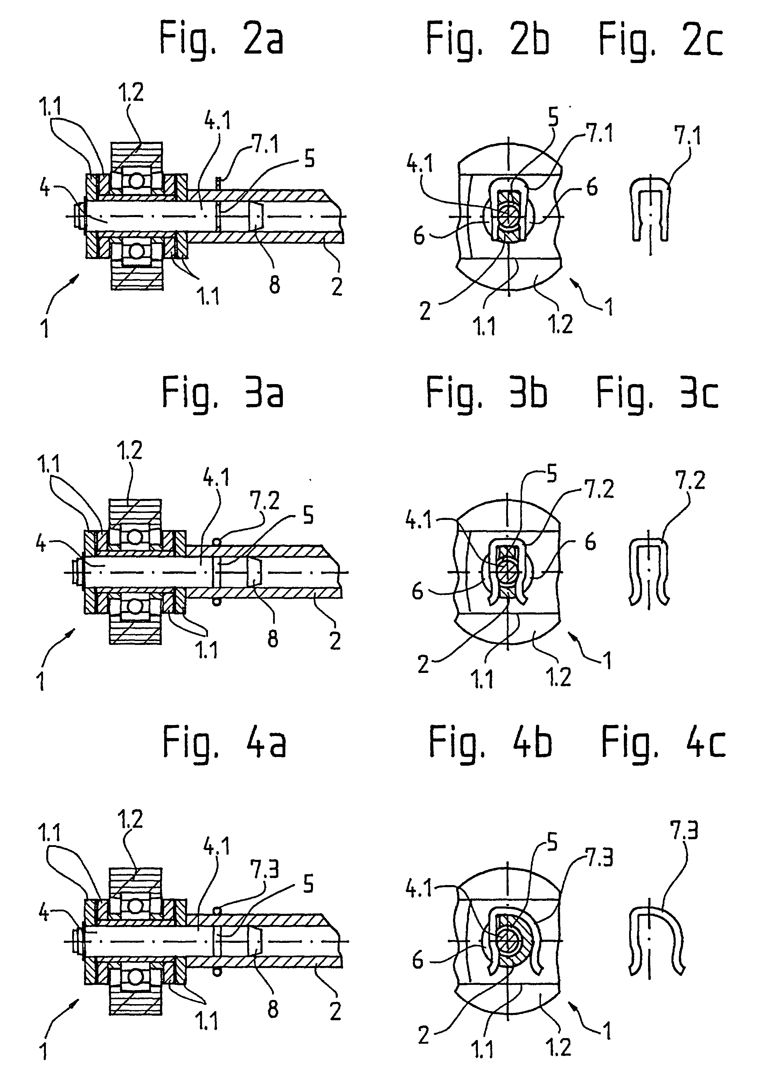

Fig. 2a: Ein Kettenstrang 1 besteht im wesentlichen aus Kettengliedern 1.1 und den Tragrollenachsen bildenden Kettenbolzen 4 mit der Tragrolle 1.2. Die Kettenbolzen 4 sind auf einer Seite nach aussen verlängert und bilden Achsstummeln 4.1, welche in die Verbindungsrohre 2 eingeschoben und in diesen mittels der Verbindungseinrichtung fixiert werden. Der Achsstummel 4.1 weist, etwas distanziert vom rechtsseitigen Ende, einen Radialeinstich 5 auf, welcher in der gleichen radialen Ebene mit einem Federbügel 7.1 in Wirkverbindung steht. Das Ende des eingeschobenen Achsstummels 4.1 ist zu einem Kegelstumpf abgedreht und bildet so einen Montagekonus 8. Dank diesem Montagekonus 8 kann der Federbügel 7.1 bereits vor dem Einschieben des Achsstummels in das Verbindungsrohr 2 eingesetzt werden, weil dieses konische Ende des Achsstummels 4.1 als Doppelkeil wirkt, welcher den Federbügel 4.1 beim Einschieben auf den Durchmesser des Achsstummels 4.1 aufweitet, bis er dann, beim Erreichen der Endlage des Achsstummels 4.1 im Verbindungsrohr 2, in den Radialeinstich 5 springt.

Fig.2b: In diesem Querschnitt sind als weitere Einzelheit der Verbindungseinrichtung beidseitig im Verbindungsrohr 2 radial eingefräste Schlitze 6 ersichtlich. Die Schlitze 6 bilden, zusammen mit dem Radialeinstich 5, eine Führung für einen Federbügel 7.1. Auf diese Art ergibt sich bei eingesetztem Federbügel 7.1 eine formschlüssige Verbindung zwischen Achsstummel 4.1 und Verbindungsrohr 2. Im entspannten Zustand weist der U-förmige Federbügel 7.1 eine Distanz auf zwischen den vertikalen Schenkeln, welche etwas kleiner ist als der Durchmesser im Radialeinstich 5 des Achsstummels 4.1. Dieses Merkmal hat den gewünschten Effekt, dass der eingesetzte Federbügel 7.1 mit einer berechneten Vorspannkraft am Durchmesser im Radialeinstich 5 des Achsstummels 4.1 anliegt. Ferner weist die innenseitige Kontur des Federbügels 7.1 an entsprechenden Stellen Vorsprünge auf, welche eine schnappende Wirkung beim Einschieben haben und den Federbügel 7.1 in der eingesetzten Lage zuverlässig halten. Da die Vorsprünge schräge Flanken aufweisen, kann der Federbügel 7.1, beispielsweise bei Reparaturarbeiten, auch problemlos wieder herausgezogen werden.

Fig.2c: Diese Figur zeigt beispielhaft die ganze Form des Federbügels 7.1. Eine Bohrung im Jochteil dient dem Einhängen eines Ziehhakens zum Herausziehen des Federbügels 7.1 und die angeschrägten Schenkelenden bewirken das Spreizen des Federbügels 7.1 beim Einsetzen in die Schlitze 6 des Verbindungsrohrs 2 und in den Radialeinstich 5 des Achsstummels 4.1. Diese Form und Art des Federbügels 7.1 ermöglicht dessen einfache Herstellung als, in grosser Stückzahl billig herstellbares, Stanzteil. Als Material findet vorzugsweise Federstahlblech oder härtbares Stahlblech Verwendung.

Fig.3a: Diese zweite Variante unterscheidet sich zur ersten dadurch, dass ein Federbügel 7.2 verwendet wird, welcher aus Federstahl-Runddraht geformt wird. Die Konsequenz bei der Anwendung dieses Federbügels 7.2 besteht darin, dass der Radialeinstich 5 im Achsstummel 4.1, angepasst an den Durchmesser des Federstahldrahtes, wahrscheinlich etwas breiter vorgesehen werden muss.

Fig.3b: Ebenfalls als Konsequenz bei der Verwendung des Federbügels 7.2 werden hier die radialen Einfräsungen 6 beim Verbindungsrohr 2 wahrscheinlich auch etwas breiter als bei der ersten Variante vorgesehen werden müssen. Im übrigen bleibt sich prinzipiell alles gleich wie bei der ersten Variante.

Fig.3c: Beispielhaft ist hier eine werkstoffgerechte Form eines Federbügels 7.2 wiedergegeben. Solche Federbügel 7.2 aus Federstahldraht können billig in grossen Stückzahlen mittels einer Federformmaschine hergestellt werden. Als Vorteil dieser Fabrikationsart kann erwähnt werden, dass keine Werkzeugkosten anfallen.

Die Fig.4a-4c zeigen eine dritte Variante der erfindungsgemässen Verbindungseinrichtung.

Fig.4a: In dieser Figur ist optisch kein Unterschied zu jener der zweiten Variante zu sehen. Ein Federbügel 7.3 besteht ebenfalls aus Federstahl-Runddraht.

Fig.4b: Der Unterschied zur ersten und zweiten Variante zeigt sich hier beim radial eingefrästen Schlitz 6 im Verbindungsrohr 2. Dieser Schlitz 6 ist nur auf einer Seite vorhanden, womit sich eine, eventuell nötige, kleinere Querschnittsreduktion durch die Einfräsung im Verbindungsrohr 2 bei der Verbindungseinrichtung ergibt. Ein Federbügel 7.3 ist dann so geformt, dass nur einer der beiden Schenkel -hier der linke- den Formschluss zwischen dem Verbindungsrohr 2 und dem Achsstummel 4.1 herstellt. Der rechte Schenkel des Federbügels 7.3 wird über den ganzen Durchmesser des Verbindungsrohrs 2 geschnappt.

Fig.4c: Die asymmetrische Form des Federbügels 7.3 ist, wie bereits erwähnt, die Folge der einseitigen Einfräsung im Verbindungsrohr 2, verursacht jedoch keine speziellen Fabrikationsprobleme. Die gezeigte Formgebung verhindert ein, bei asymmetrischen Teilen sonst gefürchtetes, Einsetzen in verdrehter Lage, weil diese Form mit dem grossen Radius oben rechts im Federbügel 7.3 ein vollständiges Einschieben und Einschnappen in verdrehter Lage verunmöglicht.

Bei allen Varianten erfüllt der Montagekonus 8 die gleiche Funktion, mittels welcher die Achsstummel 4.1 bei eingesetztem Federbügel 7.1/2/3 bis zum Anschlag an die Kettenglieder 1.1 hineingeschoben werden können mit einem Durchstossen, Oeffnen und anschliessenden Einschnappen des Federbügels 7.1/2/3. Diese Lage ist dann auch die Endlage des Achsstummels 4.1 im Achsrohr 2, bei welcher das Einschnappen des Federbügels 7.1/2/3 in den Radialeinstich 5 erfolgt und der Formschluss der beiden Teile Achsstummel 4.1 und Verbindungsrohr 2 hergestellt wird. Zum Demontieren des Achsstummels 4.1 kann der Federbügel 7.1/2/3 mit sehr wenig Kraftaufwand herausgezogen werden, worauf der Achsstummel 4.1 frei wird und ohne Kraftaufwand aus dem Achsrohr 2 herausgezogen werden kann.

Die Querschnittsschwächung durch die eingefrästen Schlitze 6 kann durch eine einfache Massnahme kompensiert werden, indem die Achsstummel 4.1 etwas länger vorgesehen werden. Längere Achsstummel 4.1 würden beispielsweise bis unter die Stufen- und Palettenlager 3 oder noch etwas weiter in das Verbindungsrohr 2 hineinragen. Eine solche Anordnung stellt, mit wenig MaterialMehraufwand, die Biegefestigkeit eines nicht eingefrästen Verbindungsrohrs 2 wieder her.

Form und Material der Federbügel 7.1/2/3 sind nicht nur in den gezeigten Ausführungsformen realisierbar. Es kann jegliches metallisches oder auch nichtmetallisches Material Verwendung finden, welches die nötigen elastischen Eigenschaften aufweist. Ebenfalls lässt sich, bei gleichen Funktionsmerkmalen, auch die Form und Kontur des Federbügels 7.1/2/3 variieren.

## Patentansprüche

1. Fahrsteig oder Fahrtreppe mit einer Verbindungseinrichtung an Transportketten für die Lagerung und Mitnahme von Paletten oder von Stufen, wobei die Transportketten aus zwei parallel angeordneten und mit Verbindungsrohren (2) quer distanziert zusammengefügten Kettensträngen (1) mit Kettengliedern (1.1), Tragrollen (1.2) und als Tragrollenachsen (4) ausgebildeten Kettenbolzen mit Achsstummeln (4.1) bestehen und wobei die Verbindungseinrichtung die beidseitig in die Verbindungsrohre (2) eingeschobenen Achsstummel (4.1) der Tragrollenachsen (4) in der eingeschobenen Lage festhält, **dadurch gekennzeichnet,**
**dass** das Verbindungsrohr (2) mindestens einen Schlitz (6) aufweist,
**dass** der Achsstummel (4.1) einen radialen Einstich (5) aufweist,
und **dass** die Verbindungseinrichtung ein Verbindungselement (7.1/2/3) aufweist, das formschlüssig durch den Schlitz (6) in den radialen Einstich (5) greift.

2. Fahrsteig oder Fahrtreppe nach Anspruch 1, wobei das Verbindungselement ein Federbügel (7.1/2/3) ist.

3. Fahrsteig oder Fahrtreppe nach Anspruch 1 oder 2, wobei das Verbindungselement durch den Schlitz (6) schnappend in den radialen Einstich (5) greift.

4. Fahrsteig oder Fahrtreppe nach einer der Ansprüche 1 bis 3, **dadurch gekennzeichnet, dass** die Einstichtiefe des Radialeinstichs (5) grösser ist als der Halbmesser des Drahtes eines Federbügels (7.2/3).

5. Fahrsteig oder Fahrtreppe nach einer der Ansprüche 1 bis 4, **dadurch gekennzeichnet, dass** der Achsstummel (4.1) zum Einschieben in das Verbindungsrohr (2) mit eingesetztem Federbügel (7.1/2/3) einen Montagekonus (8) aufweist.

6. Befestigungsverfahren an Transportketten für die Lagerung und Mitnahme von Paletten für Fahrsteige oder von Stufen für Fahrtreppen durch eine Verbindungseinrichtung, wobei die Transportketten aus zwei parallel angeordneten und mit Verbindungsrohren (2) quer distanziert zusammengefügten Kettensträngen (1) mit Kettengliedern (1.1), Tragrollen (1.2) und als Tragrollenachsen (4) ausgebildeten Kettenbolzen mit Achsstummeln (4.1) bestehen und wobei die Verbindungseinrichtung die beidseitig in die Verbindungsrohre (2) eingeschobenen Achsstummel (4.1) der Tragrollenachsen (4) in der eingeschobenen Lage festhält,
**dadurch gekennzeichnet,**
**dass** die Verbindungseinrichtung ein Verbindungselement (7.1/2/3) aufweist, das formschlüssig in mindestens einen Schlitz (6) des Verbindungsrohres (2) und in einen radialen Einstich (5) des Achsstummels (4.1) greifend eingebracht wird.

## Claims

1. Moving walkway or escalator with a connecting device at transport chains for the support and entrainment of plates or of steps, wherein the transport chains consist of two chain runs (1), which are arranged to be parallel and are joined together at a transverse spacing by connecting tubes (2), with chain links (1.1), support rollers (1.2) and chain pins, which are constructed as support roller axles (4), with axle stubs (4.1) and wherein the connecting device firmly retains the axle stubs (4.1), which are pushed into the connecting tubes (2) at both ends, of the support roller axles (4) in the pushed-in position, **characterised in that** the connecting tube (2) has at least one slot (6), that the axle stub (4.1) has a radial recess (5) and that the connecting device comprises a connecting element (7.1/2/3) which engages in shape-locking manner through the radial recess (5).

2. Moving walkway or escalator according to claim 1, wherein the connecting element is a spring clip (7.1/2/3).

3. Moving walkway or escalator according to claim 1 or 2, wherein the spring clip (7.1/2/3) engages through the slot (6) to snap into the radial recess (5) when the connecting element engages through the slot (6) to snap into the radial recess (5).

4. Moving walkway or escalator to one of claims 1 to 3, **characterised in that** the recess depth of the radial recess (5) is larger than half the diameter of the wire of a spring clip (7.2/3).

5. Moving walkway or escalator according to one of claims 1 to 4, **characterised in that** the axle stub (4.1) has an assembly cone (8) for pushing into the connecting tube (2) with inserted spring clip (7.1/2/3).

6. Fastening method at transport chains for the support and entrainment of plates of moving walkways or of steps for escalators by a connecting device, wherein the transport chains consist of two chain runs (1), which are arranged to be parallel and are joined together at a transverse spacing by connecting tubes (2), with chain links (1.1), support rollers (1.2) and chain pins, which are constructed as support roller axles (4), with axle stubs (4.1) and wherein the connecting device firmly retains the axle stubs (4.1), which are pushed into the connecting tubes (2) at both ends, of the support roller axles (4) in the pushed-in position, **characterised in that** the connecting device comprises a connecting element (7.1/2/3) which is introduced to engage in shape-locking manner in at least one slot (6) of the connecting tube (2) and in a radial recess (5) of the axle stub (4.1).

## Revendications

1. Trottoir roulant ou escalier roulant avec un dispositif de liaison sur des chaînes de transport prévues pour l'appui et l'entraînement de palettes ou de marches, les chaînes de transport se composant de deux ensembles de chaînes (1) parallèles, assemblés avec un écartement transversal à l'aide de tubes de liaison (2) et pourvus de maillons (1.1), de rouleaux porteurs (1.2) et de tourillons de chaînes conçus comme des axes de rouleaux porteurs (4) avec des bouts d'axe (4.1), et le dispositif de liaison immobilisant les bouts (4.1) des axes de rouleaux porteurs (4) une fois que ceux-ci sont introduits, des deux côtés, dans les tubes de liaison (2),
**caractérisé en ce que** le tube de liaison (2) présente au moins une fente (6), **en ce que** le bout d'axe (4.1) présente une encoche radiale (5) et **en ce que** le dispositif de liaison comporte un élément de liaison (7.1/2/3) qui pénètre par complémentarité de forme dans l'encoche radiale (5), par la fente (6).

2. Trottoir roulant ou escalier roulant selon la revendication 1, l'élément de liaison étant une bride élastique (7.1/2/3).

3. Trottoir roulant ou escalier roulant selon la revendication 1 ou 2, l'élément de liaison traversant la fente (6) pour s'enclencher dans l'encoche radiale (5).

4. Trottoir roulant ou escalier roulant selon l'une des revendications 1 à 3, **caractérisé en ce que** la profondeur de l'encoche radiale (5) est supérieure au rayon du fil d'une bride élastique (7.2/3).

5. Trottoir roulant ou escalier roulant selon l'une des revendications 1 à 4, **caractérisé en ce que** le bout d'axe (4.1), pour être introduit dans le tube de liaison (2) avec une bride élastique (7.1/2/3) mise en place, présente un cône de montage (8).

6. Procédé de fixation sur des chaînes de transport pour le support et l'entraînement de palettes pour trottoirs roulants ou de marches pour escaliers roulants, grâce à un dispositif de liaison, les chaînes de transport se composant de deux ensembles de chaînes (1) parallèles, assemblés avec un écartement transversal à l'aide de tubes de liaison (2) et pourvus de maillons (1.1), de rouleaux porteurs (1.2) et de tourillons de chaînes conçus comme des axes de rouleaux porteurs (4) avec des bouts d'axe (4.1), et le dispositif de liaison immobilisant les bouts (4.1) des axes de rouleaux porteurs (4) une fois que ceux-ci sont introduits, des deux côtés dans les tubes de liaison (2),
**caractérisé en ce que** le dispositif de liaison comporte un élément de liaison (7.1/2/3) qui est introduit pour venir en prise par complémentarité de forme dans au moins une fente (6) du tube de liaison (2) et dans une encoche radiale (5) du bout d'axe (4.1).
